# EUROPEAN PATENT SPECIFICATION

(11) **EP 4 501 120 B1**
(45) Date of publication and mention of the grant of the patent: **18.11.2026**
(21) Application number: 23779057.1
(22) Date of filing: 22.02.2023
(51) Int. Cl.: A23D 7/005, A23D 9/04, A23D 7/01, C11C 1/08, C11B 7/00, A23D 9/013, A23D 9/007

(54) **SHEA BUTTER FRACTION**
SHEA-BUTTERFRAKTION
FRACTION DE BEURRE DE KARITÉ

(30) Priority: 28.03.2022 JP 2022051117
(43) Date of publication of application: 05.02.2025
(73) Proprietor: Fuji Oil Co., Ltd., Izumisano-shi, Osaka 598-8540 (JP)
(72) Inventor: AMOAH, Jerome, Izumisano-shi, Osaka 598-8540 (JP); TAKANO, Kan, Izumisano-shi, Osaka 598-8540 (JP)
(74) Representative: Becker, Eberhard
(86) International application number: PCT/JP2023/006361
(87) International publication number: WO 2023/189027

(56) References cited:
- EP-A1- 3 100 613
- WO-A1-2013/131862
- WO-A1-2018/155490
- WO-A1-2018/206467
- WO-A1-2022/075137
- WO-A1-95/22256
- GB-A- 1 511 617
- JP-A- 2000 336 390
- US-A1- 2015 264 956
- ZHANG ZHEN ET AL: "Shea olein based specialty fats: Preparation, characterization and potential application", LWT- FOOD SCIENCE AND TECHNOLOGY, ACADEMIC PRESS, UNITED KINGDOM, vol. 86, 14 August 2017 (2017-08-14), pages 492 - 500, XP085185571, ISSN: 0023-6438, DOI: 10.1016/J.LWT.2017.08.035
- HWANG JIHYUN ET AL: "Preparation of low-diacylglycerol cocoa butter equivalents by hexane fractionation of palm stearin and shea butter", MOLECULES, vol. 26, no. 11, 27 May 2021 (2021-05-27), CH, pages 3231, XP093226879, ISSN: 1420-3049, DOI: 10.3390/molecules26113231

## Description

### Technical Field

The present invention relates to a shea butter fraction.

### Background Art

A water-in-oil emulsion such as margarine is produced by emulsifying an oil phase and an aqueous phase followed by rapid chilling and kneading. In this step, an emulsifier is commonly used for the purpose of stabilizing emulsification. The use of an emulsifier stabilizes the emulsification and thereby enabling an appropriate control of the physical properties (syneresis inhibition immediately after preparation as well as over time, resistance against graining, and spreadability retainment) of the water-in-oil emulsion. On the other hand, it is problematic that, to achieve these effects, a certain amount or more of emulsifier needs to be added, and this can cause off-taste. In addition, because of health consciousness among consumers in recent years, there is a strong interest in clean labels insisting not only a reduction of food additives but also an elimination of the use of food additives, and there has been a growing need to eliminate the use of emulsifiers as well.

As examples of techniques for substituting the function of emulsifiers in water-in-oil emulsions, there are shown a technique using egg yolk oil (Patent Document 1), and a pressure crystallization technique in crystallization of oil and/or fat (Patent Document 2). SheaOL25 is a soft shea-derived fat fraction obtained by solvent fractionation of shea butter and has a melting point of about 25.5°C. It is rich in oleic acid and SOO-type triacylglycerols. SheaOL25 shows good compatibility with palm-based oils and coconut oil, particularly at temperatures above 25°C, making it suitable as a blending base oil for specialty fats (Non-Patent Document 6). POP-rich fats having a reduced diacylglycerol content were prepared from palm stearin by a two-step hexane fractionation process. Compared with conventional two-step acetone fractionation, the process provided POP-rich fats with substantially lower DAG levels. Cocoa butter equivalents were produced by blending these POP-rich fats with SOS-rich fats obtained by hexane fractionation of degummed shea butter (Non-Patent Document 7). Patent-Document 8 relates to an edible water-in-oil emulsion comprising a fat content of between 15 and 95% with a stearin content of shea between 4 and 20% in the fatty phase, which emulsion has a solid content less than 10% of the fatty phase at 20 ° C., preferably less than 5%. Additionally, it also relates to a process for preparing such an emulsion and the use of shea stearin as a texturizing agent in water-in-oil emulsions. Patent-Document 9 discloses fat blends, suitable for food application, in particular for wrapper- or tub spreads, comprise: 30-70 of diglycerides, 70-30 of triglycerides wherein the diglycerides comprise: 25-70 % SU, 10-70 % UU, less than 30 % of SS (S = saturated fatty acid C12-C24; U = unsaturated fatty acid » C16) and wherein the triglycerides contain 1-70 wt.% of S2U-triglycerides, while the SAFA-content of the blend is less than 50 wt.%. Patent-Document 10 relates to solvent extraction of shea fat. Patent-Document 11 relates to a process for production of cocoa butter equivalent (CBEO). Patent-Document 12 relates to emulsifier compositions, to the use of the compositions as an emulsifier and to methods for preparing the composition.

### Citation List

### Patent Document

Patent Document 1: JP 2006-006108 A
Patent Document 2: JP 2006-254816 A
Patent Document 3: JP S52-063206 A
Patent Document 4: JP 2015-533482 T
Patent Document 5: JP 2001-098293 A
Non-Patent Document 6: ZHANG ZHEN ET AL : "Shea olein based specialty fats : Preparation, characterization and potential application", LWT- FOOD SCIENCE AND TECHNOLOGY , ACADEMIC PRESS , UNITED KINGDOM, vol . 86, 14 August 2017 ( 2017-08-14 ) , pages 492-500
Non-Patent Document D7: HWANG JIHYUN ET AL : "Preparation of low diacylglycerol cocoa butter equivalents by hexane fractionation of palm stearin and shea butter", MOLECULES , vol . 26 , no . 11 , 27 May 2021 ( 2021-05-27 ), page 3231
Patent Document 8: EP 3100613 A1
Patent Document 9: WO 95/22256 A1
Patent Document 10: GB1 511 617 A
Patent Document 11: US 2015/264956 A1
Patent Document 12: WO 2018/206467 A1

### Summary of Invention

### Technical Problem

It can be said that Patent Document 1 has a concern of using egg yolk oil which can be an allergen substance, and hence it is believed to be desirable to use a material including no allergen substance. Patent Document 2 requires unique production facilities and has a concern of expensive initial investment, and hence it is believed to be desirable that a substitute for an emulsifier can be produced by a simple method.

Therefore, there is a demand for a material that can reduce an amount of an emulsifier or can be used as a substitute for an emulsifier and that can be used in water-in-oil emulsions without requiring unique facilities for producing water-in-oil emulsion.

### Solution to Problem

As a result of intensive studies to solve this issue, the present inventors have surprisingly found that a blending of a specific shea butter fraction obtained by fractionating shea butter into any oil and/or fat makes it possible to provide a substitute for an emulsifier in water-in-oil emulsions, and in addition, to suppress changes in physical properties not only immediately after preparation of the water-in-oil emulsion but also over time, and thus the present invention has been completed.

The invention is defined as set out in the appended claims and the following serves for a better understanding.

### Advantageous Effects of Invention

According to the present invention, there can be provided a shea butter fraction obtained by fractionating shea butter, and this shea butter fraction can impart a function required for an emulsifier when used in a water-in-oil emulsion. That is, the use of this shea butter fraction in a water-in-oil emulsion makes it possible to suppress the changes in physical properties not only immediately after the preparation of the water-in-oil emulsion but also over time as well.

### Description of Embodiments

Hereinafter, the present invention will be described in detail.

Shea butter which is a raw material of the shea butter fraction of the present invention is a general term for oil and/or fat obtained from seeds of Vitellaria paradoxa (Butyrospermum parkii) indigenous to an area commonly called shea belt in the northern and central African regions. Shea butter is solid at normal temperature, and may be used with its physical properties as it is, but is often used after being separated into a solid portion and a liquid portion in order to enhance the function of the solid portion used as a substitute oil and/or fat for cocoa butter. Other than being used as a substitute oil and/or fat for cocoa butter, the solid part obtained by fractionation is, by taking advantage of its excellent properties, often used for the purpose of enhancing the function of chocolate such as prevention of so-called fat bloom that whitens the surface of chocolate products or disintegrates the inside thereof, and hence is mainly used in chocolate products (Patent Documents 3 to 5).

The raw material of the shea butter fraction of the present invention is shea butter. The shea butter is preferably shea olein, and more preferably shea olein that is a liquid part after a solid portion has been obtained as a substitute oil and/or fat for cocoa butter. In addition, the above-described shea olein to be used is preferably a refined shea olein that has undergone a general refining treatment including degumming, decoloring, and deodorization steps. When conducting fractionation process with use of crude shea olein as a raw material, fractionation may be difficult due to a presence of a large amount of free fatty acids.

The method for producing a shea butter fraction of the present invention includes a step of removing a low-melting point fraction by fractionation. The low-melting point fraction as used herein has a melting point of 14°C or lower, preferably 13°C or lower, and more preferably 12°C or lower.

Examples of the fractionation method include solvent fractionation, dry fractionation, and detergent fractionation, and any method can be used as long as the quality of resultant shea butter fractions is acceptable.

When solvent fractionation is conducted as a method for producing a shea butter fraction of the present invention, a target shea butter fraction can be obtained by melting a mixture of an oil and/or fat raw material and a solvent, then gradually lowering the temperature, holding the mixture at a constant temperature for a certain period of time to allow crystallization, thereby ensuring a solid portion part, removing the solvent, and allowing the resultant product to undergo an optional refining step if necessary.

When solvent fractionation is conducted as the method for producing the shea butter fraction of the present invention, hexane and acetone can be exemplified as a solvent used for solvent fractionation, and fractionation using any solvent is possible, but the shea butter fraction is preferably produced by hexane fractionation. When produced by acetone fractionation, diglyceride and unsaponifiable matter component, which are active ingredients, are insufficiently concentrated or do not remain in the shea butter fraction in some cases depending on conditions.

The ratios of the oil and/or fat raw material and the solvent in the solvent fractionation step are preferably in a range from 5 parts to 50 parts and in a range from 95 to 50 parts, respectively, more preferably in a range from 10 parts to 40 parts and in a range from 90 parts to 60 parts, respectively. The temperature to conduct crystallization is preferably in a range from -15°C to 25°C, and more preferably in a range from -15°C to 0°C. The retention time at the crystallization temperature is preferably in a range from 5 minutes to 200 minutes, more preferably in a range from 10 to 150 minutes, and still more preferably in a range from 15 to 120 minutes.

When dry fractionation is conducted as a method for producing a shea butter fraction of the present invention, a target shea butter fraction can be obtained by melting an oil and/or fat raw material, then gradually lowering the temperature, retaining the oil and/or fat raw material at a constant temperature for a certain period of time to allow crystallization, thereby ensuring a solid portion part, and allowing the resultant product to undergo an optional refining step if necessary.

The temperature to perform crystallization is preferably in a range from 0°C to 30°C, and more preferably in a range from 5°C to 25°C. The retention time at the crystallization temperature is preferably in a range from 10 minutes to 400 minutes, more preferably in a range from 30 to 300 minutes, and still more preferably in a range from 60 to 200 minutes.

It is no more than a conjecture, but it is inferred that the coexistence of diglyceride and unsaponifiable matter contained in the shea butter fraction of the present invention acts as an active ingredient that exhibits emulsifiability at the time when the shea butter fraction is blended into the water-in-oil emulsion.

The iodine value of the shea butter fraction of the present invention needs to be 55 or less, and is preferably in a range from 20 to 55, more preferably in a range from 25 to 55, still more preferably in a range from 30 to 55, and most preferably in a range from 35 to 52. If more than 55 is the iodine value of the shea butter fraction of the present invention, crystallization during cooling slows down in the production of a water-in-oil emulsion, which may result in graining, or sufficient spreadability is not obtained in some cases.

The slip melting point of the shea butter fraction of the present invention needs to be 40°C or higher, and is preferably 43°C or higher, more preferably 45°C or higher, still more preferably 48°C or higher, and most preferably 50°C or higher. If lower than 40°C is the slip melting point of the shea butter fraction of the present invention, crystallization during cooling slows down in the production of a water-in-oil emulsion, which may result in graining, or sufficient spreadability is not obtained in some cases.

The diglyceride content in the shea butter fraction of the present invention needs to be 22 wt.% or more, preferably 25 wt.% or more, more preferably 28 wt.% or more, and still more preferably 30 wt.% or more. If less than 22 wt.% is the diglyceride content in the shea butter fraction of the present invention, its emulsifiability becomes insufficient, which may cause syneresis during storage.

The content of diglyceride having one stearic acid and one oleic acid being bonded as constituent fatty acids in the shea butter fraction of the present invention is preferably 10 wt.% or more, more preferably in a range from 11 to 90 wt.%, still more preferably in a range from 12 to 80 wt.%, and most preferably in a range from 13 to 75 wt.%. If less than 10 wt.% is the content of diglyceride having one stearic acid and one oleic acid being bonded as constituent fatty acids in the shea butter fraction of the present invention, the emulsifiability becomes insufficient, which may cause syneresis during storage.

The SOO triglyceride content of the shea butter fraction in the present invention is preferably 35 wt.% or less, more preferably 33 wt.% or less, and still more preferably 30 wt.% or less. If more than 35 wt.% is the content of SOO triglyceride in the shea butter fraction of the present invention, the content of diglyceride relatively decreases, whereby emulsifiability becomes insufficient, which may cause syneresis during storage.

Note that, the SOO triglyceride refers to a triglyceride having one molecule of stearic acid and two molecules of oleic acid being bonded as constituent fatty acids.

The content of the unsaponifiable matter in the shea butter fraction of the present invention is preferably 0.5 wt.% or more, more preferably 1 wt.% or more, and still more preferably 1.5 wt.% or more. If less than 0.5 wt.% is the content of the unsaponifiable matter in the shea butter fraction of the present invention, emulsifying function resulted from the unsaponifiable matter is not enough and hence the emulsifiability becomes insufficient and the syneresis may occur during storage.

The oil and/or fat that can be used in the oil and/or fat and the water-in-oil emulsion obtained using the shea butter fraction according to the present invention preferably contains shea butter, but oil and/or fat other than the shea butter may be used. Examples of oil and/or fat that can be used other than shea butter include vegetable oil and/or fat such as high erucic acid rapeseed oil, rapeseed oil (canola oil), soybean oil, sunflower seed oil, cottonseed oil, peanut oil, rice bran oil, corn oil, safflower oil, olive oil, kapok oil, sesame oil, evening primrose oil, palm oil, palm kernel oil, coconut oil, medium-chain fatty acid-conjugated triglycerides (MCT), and sal fat, and animal oil and/or fat such as milk fat, beef tallow oil, lard, fish oil, and whale oil. In the present invention, examples that can be mentioned include processed oil and/or fat that is obtained by subjecting one or more oils and/or fats selected from the group mentioned above to one or more processes selected from the group consisting of fractionation, curing, and interesterification.

The oil and/or fat obtained using the shea butter fraction according to the present invention preferably contains the shea butter fraction in an amount from 0.01 to 5 wt.%, more preferably from 0.03 to 4 wt.%, still more preferably from 0.05 to 3 wt.%, and most preferably from 0.1 to 2 wt.%. If less than 0.01 wt.% is the shea butter fraction contained in the oil and/or fat obtained using the shea butter fraction according to the present invention, the emulsifying function of the shea butter fraction is not enough in some cases. In contrast, if the content is more than 5 wt.%, the emulsifying function of the shea butter fraction is too strong, and there is a possibility that general properties as a water-in-oil emulsion which would have finally obtained cannot be retained.

The compositions other than the shea butter fraction, in the oil and/or fat obtained using the shea butter fraction according to the present invention, is not particularly limited, but it is preferable to contain at least 40 wt.% of palm oil and/or processed palm oil that has undergone one or more processes selected from the group consisting of fractionation, curing and interesterification. It is more preferable to contain at least 50 wt.% of palm oil and/or processed palm oil that has undergone one or more processes selected from the group consisting of fractionation, curing and interesterification. It is most preferable to contain at least 60 wt.% of palm oil and/or processed palm oil that has undergone one or more processes selected from the group consisting of fractionation, curing and interesterification.

The water-in-oil emulsion obtained using the shea butter fraction according to the present invention preferably contains the shea butter fraction in an amount ranging from 0.006 to 3 wt.%, more preferably from 0.02 to 2.5 wt.%, still more preferably from 0.04 to 2 wt.%, and most preferably from 0.08 to 1.6 wt.%. If less than 0.006 wt.% is the shea butter fraction contained in the water-in-oil emulsion obtained using the shea butter fraction according to the present invention, the emulsifying function of the shea butter fraction is not enough in some cases. In contrast, if the content is more than 3 wt.%, the emulsifying function of the shea butter fraction is too strong, and there is a possibility that general properties as a water-in-oil emulsion cannot be retained.

The compositions other than the shea butter fraction, in the water-in-oil emulsion obtained using the shea butter fraction according to the present invention, is not particularly limited.

However, the oil phase preferably contains palm oil and/or processed palm oil that has undergone one or more processes selected from the group consisting of fractionation, curing, and interesterification, at least in an amount of 32 wt.% or more relative to the water-in-oil emulsion. It is more preferable that palm oil and/or processed palm oil that has undergone one or more processes selected from the group consisting of fractionation, curing, and interesterification is contained at least in an amount of 40 wt.% or more relative to the water-in-oil emulsion. It is further more preferable that palm oil and/or processed palm oil that has undergone one or more processes selected from the group consisting of fractionation, curing, and interesterification is contained in an amount of at least 48 wt.% relative to the water-in-oil emulsion.

Similarly, the aqueous phase preferably contains water in an amount ranging from 10 to 40 wt.% relative to the water-in-oil emulsion. It is more preferable that the aqueous phase contains water in an amount ranging from 12 to 30 wt.% relative to the water-in-oil emulsion. It is further more preferable that the aqueous phase contains water in an amount ranging from 15 to 25 wt.% relative to the water-in-oil emulsion. It is most preferable that the aqueous phase contains water in an amount ranging from 15 to 20 wt.% relative to the water-in-oil emulsion.

The water-in-oil emulsion obtained using the shea butter fraction according to the present invention can be prepared by adding, dissolving and dispersing a flavor raw material such as an aqueous solution or powder containing a watersoluble milk component, a component derived from soybean, almond, cocoa, or oat into water or hot water, and additionally adding a commonly used raw materials such as salt, milk powder, dietary fiber, sugars, a thickener, an emulsifier, an inorganic salt, a preservative, a shelf life improver, a taste improving agent, a fragrance, or a pigment thereto if needed.

The method for producing said water-in-oil emulsion is not particularly limited, but the water-in-oil emulsion can be produced by preliminarily emulsifying the oil phase and the aqueous phase in a usual method, followed by rapid chilling and kneading with Perfector, Votator, Kombinator, or the like.

The present invention can also be taken as a method for reducing an amount of an emulsifier in a water-in-oil emulsion or providing a substitute for an emulsifier in a water-in-oil emulsion by way of blending a specific shea butter fraction. Specifically, a shea butter fraction having an iodine value of 55 or less, a slip melting point of 40°C or higher, and a diglyceride content of 22 wt.% or more is blended into a water-in-oil emulsion, whereby an amount of an emulsifier in the water-in-oil emulsion can be reduced or a substitute for an emulsifier in the water-in-oil emulsion can be provided. Preferably, a shea butter fraction having an iodine value of 55 or less, a slip melting point of 40°C or higher, a diglyceride content of 22 wt.% or more, and a content of diglyceride having one stearic acid and one oleic acid being bonded as constituent fatty acids of 10 wt.% or more is blended into a water-in-oil emulsion, whereby an amount of an emulsifier in the water-in-oil emulsion can be reduced or a substitute for an emulsifier in the water-in-oil emulsion can be provided.

### Examples

Hereinafter, the present invention will be specifically described with reference to Examples. Note that, the numerical values refer to weight-based values unless otherwise specified.

### (Iodine value)

The iodine value of oil and/or fat was measured in accordance with the JOCS standard methods for the analysis of fats, oils, and related materials 2.3.4.1-2013.

### (Melting point)

The melting point of the oil and/or fat was measured in accordance with the JOCS standard methods for the analysis of fats, oils, and related materials 2.2.4.2-1996.

### (Method for measuring composition of diglyceride and triglyceride (TG))

The composition of diglyceride and triglyceride (TG) of the fat and oil was measured by high performance liquid chromatography in accordance with the JOCS standard methods for the analysis of fats, oils, and related materials 2.4.6.2-2013. The measurement was conducted under the conditions of (column; ODS, eluent; acetone/acetonitrile = 80/20, liquid volume; 0.9 ml/min, column temperature; 25°C, detector; differential refractometer).

### (Method for measuring content of unsaponifiable matter)

The content of the unsaponifiable matter in the oil and/or fat was measured in accordance with the JOCS standard methods for the analysis of fats, oils and related materials 2.4.6 triacylglycerin composition (gas chromatography) established by Japan Oil Chemists' Society, and its content was determined from the peak area attributed to the unsaponifiable matter.

### (Example 1)

A refined shea olein (available from FUJI OIL CO., LTD., the same applies hereinafter) in melted state and hexane were mixed so that the ratio was 20 parts and 80 parts, respectively, the temperature was gradually lowered while stirring with a paddle mixer at 100 rpm, and once the temperature reached -5°C, the mixture was held at that temperature for 20 minutes. The obtained mixed liquid was separated into a solid portion and a liquid portion by filtration, and hexane was removed from the obtained solid portion to afford a shea butter fraction of the present invention. The fractional yield was 4.8 wt.% based on iodine value.

### (Example 2)

The temperature of a refined shea olein in melted state was gradually lowered while stirring with a paddle mixer at 100 rpm, and once the temperature reached 15°C, the mixture was held at that temperature for 180 minutes. The obtained mixed liquid was separated into a solid portion and a liquid portion by filtration, and the shea butter fraction of the present invention was obtained from the resultant solid portion. The fractional yield was 9.9 wt.% based on the raw material.

### (Comparative Example 1)

Refined shea olein as a fractionated raw material of Example 1 and Example 2 was used.

Some of the iodine value, melting point, diglyceride composition, triglyceride composition, and unsaponifiable matter content of the oil and/or fat of Example 1, Example 2, and Comparative Example 1 are shown below.

Note that, the meanings of abbreviations of diglyceride composition and triglyceride composition are as follows.
· OO-DG: diglyceride having two oleic acids being bonded as constituent fatty acids
· SO-DG: diglyceride having one stearic acid and one oleic acid being bonded as constituent fatty acids
· SS-DG: diglyceride having two stearic acids being bonded as constituent fatty acids
· SOO: triglyceride having one molecule of stearic acid and two molecules of oleic acid being bonded as constituent fatty acids
· SOS: triglyceride having two molecules of stearic acid and one molecule of oleic acid being bonded as constituent fatty acids
· SSS: triglyceride having three molecules of stearic acid being bonded as constituent fatty acid

**(Table 1)**

| | Iodine value [-] | Melting point [°C] | Composition of shea butter fraction [wt.%] | | | | | | | Unsaponifiable matter [wt.%] |
|---|---|---|---|---|---|---|---|---|---|---|
| | | | Diglyceride | | | | Triglyceride | | | |
| | | | Total amount | OO-DG | SO-DG | SS-DG | SOO | SOS | SSS | |
| Example 1 | 38.5 | 52.8 | 96.1 | 10.7 | 73.2 | 8.1 | 1.0 | 0.5 | 0.0 | 2.1 |
| Example 2 | 50.2 | 56.3 | 33.6 | 1.6 | 13.2 | 10.8 | 27.6 | 6.3 | 0.0 | 9.2 |
| Comparative Example 1 | 68.5 | 14.9 | 19.6 | 2.0 | 9.0 | 8.2 | 37.6 | 4.5 | 0.3 | 11.7 |

Examples 1 and 2 each had an iodine value of 55 or less, a slip melting point of 40°C or higher, and a diglyceride content of 22 wt.% or more.

In contrast, Comparative Example 1 had an iodine value of more than 55, a slip melting point of less than 40°C, and a diglyceride content of less than 22 wt.%.

Water-in-oil emulsions of Example 3 to 4, Comparative Example 2 to 4, and Reference Example 1 were prepared according to the formulation in Table 2 and the preparation method of the water-in-oil emulsion.

**(Table 2)**

| | | Example 3 | Example 4 | Comparative Example 2 | Reference Example 1 | Comparative Example 3 | Comparative Example 4 |
|---|---|---|---|---|---|---|---|
| Oil phase | Refined palm oil | 56.0 | 56.0 | 56.0 | 56.0 | 56.0 | 80.0 |
| | Refined soybean oil | 24.0 | 24.0 | 24.0 | 24.0 | 24.0 | - |
| | Example 1 | 0.3 | - | - | - | - | - |
| | Example 2 | - | 0.3 | - | - | - | - |
| | Comparative Example 1 | - | - | 0.3 | - | - | - |
| Aqueous phase | Water | 18.6 | 18.6 | 18.6 | 18.1 | 18.6 | 18.6 |
| | Salt | 1.0 | 1.0 | 1.0 | 1.0 | 1.0 | 1.0 |
| | Skimmed milk powder | 0.1 | 0.1 | 0.1 | 0.1 | 0.1 | 0.1 |
| Emulsifier | Lecithin | - | - | - | 0.8 | 0.3 | 0.3 |

### (Method for preparing water-in-oil emulsion)

1. An oil and/or fat mixture and an emulsifier were melted at 60 to 70°C to prepare an oil phase.
2. A raw material categorized as an aqueous phase raw material was added into water and dissolved.
3. The aqueous phase was added to the oil phase during stirring and mixed.
4. The mixed liquid was rapidly chilled and solidified with ice water while stirring and a water-in-oil emulsion was obtained.

The syneresis, graining, and spreadability of the water-in-oil emulsion immediately after preparation were evaluated according to the respective evaluation methods and evaluation criteria. Those satisfying the acceptance criteria in all of the respective items should have passed the comprehensive evaluation. The results are shown in Table 3.

### (Evaluation method for syneresis)

The presence or absence of syneresis in a surface (including a cross section, the same applies hereinafter) of a water-in-oil emulsion that was cleaved with a metal spatula, and the presence or absence of the occurrence of syneresis at the time of crushing the water-in-oil emulsion were visually checked.

### (Evaluation criteria for syneresis)

Five panelists engaging in the development of water-in-oil emulsions and creating trial products of water-in-oil emulsions every day have conducted the evaluation based on the following evaluation criteria. After the consultation of the five panelists, samples with 4 points or more were rated as acceptable.
· 5 points: No water droplet is observed at all on the cleaved surface, and no syneresis occurs even by crushing, and the structure is uniform.
· 4 points: No water droplet on the cleaved surface is observed, and no syneresis occurs even by crushing, but there can be seen a part where the tissue is uneven and syneresis is about to occur.
· 3 points: No water droplet on the cleaved surface is observed, but syneresis occurs by crushing.
· 2 points: A small amount of water droplets are observed on the cleaved surface, and syneresis occurs by crushing.
· 1 point: There is observed a large amount of water separation well enough to drip onto the cleaved surface, and a larger amount of water separation occurs by crushing.

### (Evaluation method for graining)

The water-in-oil emulsion was crushed and thinned, and then the presence or absence of graining was visually checked.

### (Graining evaluation criteria)

Five panelists engaging in the development of water-in-oil emulsions and creating trial products of water-in-oil emulsions every day have conducted the evaluation based on the following evaluation criteria. After the consultation of the five panelists, samples with 4 points or more were rated as acceptable.
· 5 points: Graining is not observed, and the structure appearance is uniform.
· 4 points: granular graining is not observed, but roughness or lumpy lumps are observed on the surface.
· 3 points: Graining with small number of grains is observed.
· 2 points: Graining with a large number of grains is observed.
· 1 point: Graining with a large number of grains is observed, and surface roughness and lumpy lumps are also observed.

### (Evaluation method for spreadability)

It was visually checked whether the water-in-oil emulsion was smoothly spread and deformed when the metal spatula was moved horizontally while being pressed against the water-in-oil emulsion.

### (Evaluation criteria for spreadability)

Five panelists engaging in the development of water-in-oil emulsions and creating trial products of water-in-oil emulsions every day have conducted the evaluation based on the following evaluation criteria. After the consultation of the five panelists, samples with 4 points or more were rated as acceptable.
· 5 points: The emulsion is uniformly and smoothly spread or deformed.
· 4 points: The emulsion is spread or deformed with non-uniform and rough surface.
· 3 points: The emulsion is spread or deformed, but a hard lump-like part is observed.
· 2 points: Spreading and deformation are slightly observed, but the water-in-oil emulsion crumbles to fine pieces.
· 1 point: The emulsion is not spread or deformed, and the water-in-oil emulsion is broken.

**(Table 3)**

| | Example 3 | Example 4 | Comparative Example 2 | Reference Example 1 | Comparative Example 3 | Comparative Example 4 |
|---|---|---|---|---|---|---|
| Syneresis | 5 | 5 | 5 | 5 | 2 | 2 |
| Graining | 5 | 5 | 5 | 5 | 5 | 1 |
| Spreadability | 5 | 5 | 5 | 5 | 2 | 1 |

### (Discussion on Table 3)

· Example 3, Example 4, and Comparative Example 2 had physical properties of acceptance criteria in all items of syneresis, graining, and spreadability.
· Because a large amount of lecithin was blended as an emulsifier, Reference Example 1 had physical properties of acceptance criteria in all items of syneresis, graining, and spreadability.
· The blending ratio of lecithin in Comparative Example 3 was the same as the blending ratios of Example 1, Example 2 and Comparative Example 1 each used as the shea butter fraction in Example 3, Example 4 and Comparative Example 2, respectively, but Comparative Example 3 was not able to have physical properties of the acceptance criteria in items of syneresis and spreadability.
· Comparative Example 4 was not able to have physical properties of acceptance criteria in all items of syneresis, graining, and spreadability.

Example 3, Example 4, and Comparative Example 2 which had been able to have physical properties of acceptance criteria immediately after preparation were stored under the undermentioned storage conditions of the water-in-oil emulsion, thereafter the evaluation of syneresis, graining, and spreadability after storage were conducted based on the already-described methods and criteria. The evaluation results of the water-in-oil emulsion after storage are shown in Table 4.

### (Storage conditions of water-in-oil emulsion)

About 60 g in weight of a water-in-oil emulsion prepared by the preparation method for a water-in-oil emulsion was placed on a metal tray and stored under the following four conditions.
· Storage in a temperature control cabinet at 5°C for 1 day
· Storage in a temperature control cabinet at 20°C for 1 day
· Storage in a temperature control cabinet at 5°C for 3 days
· Storage in a temperature control cabinet at 20°C for 3 days

**(Table 4)**

| | | Example 3 | Example 4 | Comparative Example 2 |
|---|---|---|---|---|
| Immediately after preparation | Syneresis | 5 | 5 | 5 |
| | Graining | 5 | 5 | 5 |
| | Spreadability | 5 | 5 | 5 |
| Storage at 5°C for 1 day | Syneresis | 4 | 5 | 3 |
| | Graining | 4 | 4 | 4 |
| | Spreadability | 5 | 5 | 5 |
| Storage at 20°C for 1 day | Syneresis | 4 | 5 | 4 |
| | Graining | 5 | 4 | 5 |
| | Spreadability | 5 | 5 | 5 |
| Storage at 5°C for 3 days | Syneresis | 4 | 4 | 3 |
| | Graining | 4 | 4 | 4 |
| | Spreadability | 5 | 5 | 5 |
| Storage at 20°C for 3 days | Syneresis | 4 | 5 | 4 |
| | Graining | 5 | 4 | 5 |
| | Spreadability | 5 | 5 | 5 |

### (Discussion on Table 4)

· Example 3 and Example 4 were able to have physical properties of acceptance criteria in all items of syneresis, graining, and spreadability under all four storage conditions of the setting, and were able to retain the physical property criteria before storage.
· Comparative Example 2 was not able to have physical properties of acceptance criteria in terms of syneresis after storage at 5°C for 1 day and storage at 5°C for 3 days, and was not able to retain the physical property criteria before storage.

### Industrial Applicability

Fractionating of shea butter under specific conditions can provide a specific shea butter fraction, and when this shea butter fraction is used in a water-in-oil emulsion, a function required for an emulsifier is imparted, and thereby enabling to suitably produce a water-in-oil emulsion capable of eliminating the use of emulsifier or reducing an added amount of emulsifier.

## Claims

1. A shea butter fraction satisfying all of (A) to (C):
(A) an iodine value is 55 or less;
(B) a slip melting point is 40°C or higher; and
(C) a content of diglyceride is 22 wt.% or more.

2. The shea butter fraction according to claim 1, further satisfying: (D) a content of diglyceride having one stearic acid and one oleic acid being bonded as constituent fatty acids is 10 wt.% or more.

3. The shea butter fraction according to claim 1 or 2, further satisfying that an SOO triglyceride content is 35 wt.% or less,
with proviso that the SOO triglyceride refers to a triglyceride having one molecule of stearic acid and two molecules of oleic acid being bonded as constituent fatty acids.

4. The shea butter fraction according to any one of claims 1 to 3, further satisfying that a content of an unsaponifiable matter is 0.5 wt.% or more.

5. Use of a shea butter fraction according to any one of claims 1 to 4 in an oil and/or fat composition in an amount ranging from 0.01 to 5 wt.%.

6. Use of a shea butter fraction according to any one of claims 1 to 4 as a substitute for an emulsifier in a water-in-oil emulsion in an amount ranging from 0.006 to 3 wt.%.

7. A method for producing a shea butter fraction, the method comprising removing a low-melting point fraction by fractionating shea butter, wherein a resultant shea butter fraction satisfies all of (A) to (C):
(A) an iodine value is 55 or less;
(B) a slip melting point is 40°C or higher; and
(C) a content of diglyceride is 22 wt.% or more.

8. A method for reducing an amount of an emulsifier in a water-in-oil emulsion or providing a substitute for an emulsifier in a water-in-oil emulsion, by blending a shea butter fraction satisfying all of (A) to (C):
(A) an iodine value is 55 or less;
(B) a slip melting point is 40°C or higher; and
(C) a content of diglyceride is 22 wt.% or more.

## Patentansprüche

1. Sheabutterfraktion, welche die folgenden Bedingungen (A) bis (C) erfüllt:
(A) eine Iodzahl beträgt 55 oder weniger;
(B) ein Steigschmelzpunkt beträgt 40 °C oder mehr; und
(C) ein Gehalt an Diglycerid beträgt 22 Gew.-% oder mehr.

2. Sheabutterfraktion nach Anspruch 1, welche ferner die folgende Bedingung erfüllt: (D) ein Gehalt an Diglycerid mit einer Stearinsäure und einer Ölsäure, die als Fettsäurekomponenten gebunden sind, beträgt 10 Gew.-% oder mehr.

3. Sheabutterfraktion nach Anspruch 1 oder 2, die ferner erfüllt, dass ein SOO-Triglyceridgehalt 35 Gew.-% oder weniger beträgt,
mit der Maßgabe, dass sich das SOO-Triglycerid auf ein Triglycerid mit einem Molekül Stearinsäure und zwei Molekülen Ölsäure bezieht, die als Fettsäurekomponenten gebunden sind.

4. Sheabutterfraktion nach einem der Ansprüche 1 bis 3, die ferner erfüllt, dass ein Gehalt an unverseifbarer Substanz 0,5 Gew.-% oder mehr beträgt.

5. Verwendung einer Sheabutterfraktion nach einem der Ansprüche 1 bis 4 in einer Öl- und/oder Fettzusammensetzung in einer Menge, die von 0,01 bis 5 Gew.-% reicht.

6. Verwendung einer Sheabutterfraktion nach einem der Ansprüche 1 bis 4 als ein Ersatz für einen Emulgator in einer Wasser-in-Öl-Emulsion in einer Menge, die von 0,006 bis 3 Gew.-% reicht.

7. Verfahren zum Produzieren einer Sheabutterfraktion, wobei das Verfahren Entfernen einer Fraktion mit niedrigem Schmelzpunkt durch Fraktionieren von Sheabutter umfasst, wobei eine resultierende Sheabutterfraktion alle von (A) bis (C) erfüllt:
(A) eine Iodzahl beträgt 55 oder weniger;
(B) ein Steigschmelzpunkt beträgt 40 °C oder höher; und
(C) ein Gehalt an Diglycerid beträgt 22 Gew.-% oder mehr.

8. Verfahren zum Reduzieren einer Menge eines Emulgators in einer Wasser-in-Öl-Emulsion oder zum Bereitstellen eines Ersatzes für einen Emulgator in einer Wasser-in-Öl-Emulsion durch Beimischung einer Sheabutterfraktion, die alle von (A) bis (C) erfüllt:
(A) eine Iodzahl beträgt 55 oder weniger;
(B) ein Steigschmelzpunkt beträgt 40 °C oder höher; und
(C) ein Gehalt an Diglycerid beträgt 22 Gew.-% oder mehr.

## Revendications

1. Fraction de beurre de karité satisfaisant à l'ensemble des conditions (A) à (C) suivantes:
(A) un indice d'iode est de 55 ou moins ;
(B) un point de fusion par glissement est de 40 °C ou plus ; et
(C) une teneur en diglycérides est de 22 % en poids ou plus.

2. Fraction de beurre de karité selon la revendication 1, satisfaisant en outre à : (D) une teneur en diglycéride dont les acides gras constitutifs sont l'acide stéarique et l'acide oléique est supérieure ou égale à 10 % en poids.

3. Fraction de beurre de karité selon la revendication 1 ou 2, satisfaisant en outre à la condition selon laquelle la teneur en triglycéride SOO est inférieure ou égale à 35 % en poids,
à condition que le triglycéride SOO désigne un triglycéride ayant une molécule d'acide stéarique et deux molécules d'acide oléique liées en tant qu'acides gras constitutifs.

4. Fraction de beurre de karité selon l'une quelconque des revendications 1 à 3, satisfaisant en outre au fait qu'une teneur en matière insaponifiable est de 0,5 % en poids ou plus.

5. Utilisation d'une fraction de beurre de karité selon l'une quelconque des revendications 1 à 4 dans une composition d'huile et/ou de matière grasse en une quantité allant de 0,01 à 5 % en poids.

6. Utilisation d'une fraction de beurre de karité selon l'une quelconque des revendications 1 à 4 en tant que substitut pour un émulsifiant dans une émulsion eau-dans-l'huile en une quantité allant de 0,006 à 3 % en poids.

7. Procédé de production d'une fraction de beurre de karité, le procédé comprenant l'élimination d'une fraction à bas point de fusion par fractionnement de beurre de karité, dans lequel une fraction de beurre de karité résultante satisfait à l'ensemble des condictions (A) à (C) suivantes:
(A) un indice d'iode est de 55 ou moins ;
(B) un point de fusion par glissement est de 40 °C ou plus ; et
(C) une teneur en diglycéride est de 22 % en poids ou plus.

8. Procédé pour réduire une quantité d'un émulsifiant dans une émulsion eau-dans-l'huile ou fournir un substitut à un émulsifiant dans une émulsion eau-dans-l'huile, en mélangeant une fraction de beurre de karité satisfaisant à l'ensemble des conditions (A) à (C) :
(A) un indice d'iode est de 55 ou moins ;
(B) un point de fusion par glissement est de 40 °C ou plus ; et
(C) une teneur en diglycéride est de 22 % en poids ou plus.
